(19) Europäisches Patentamt
European Patent Office
Office européen des brevets

(11) Publication number: 0 254 232 A2

# (12) EUROPEAN PATENT APPLICATION

(21) Application number: 87110413.9

(22) Date of filing: 17.07.87

(51) Int. Cl.4: C09D 3/49 , C08G 18/67

(30) Priority: 25.07.86 US 889382

(43) Date of publication of application:
27.01.88 Bulletin 88/04

(84) Designated Contracting States:
AT BE CH DE ES FR GB IT LI LU NL SE

(71) Applicant: THE GLIDDEN COMPANY
900 Huntington Building 925 Euclid Avenue
Cleveland Ohio 44115(US)

(72) Inventor: Toman, Perry A.
7710 Stone Road
Medina Ohio 44256(US)

(74) Representative: Baillie, Iain Cameron et al
c/o Ladas & Parry Isartorplatz 5
D-8000 München 2(DE)

## (54) Ethylenically unsaturated urethanes for gel coat compositions.

(57) Gel coat composites having water boil resistance and improved weathering characteristics comprise 50 to 90 weight percent of a low number average molecular weight (500 to 1500) non-aromatic urethane resin backbone having terminal or pendant monoethylenic unsaturation derived from first-stage reaction of glycol with a diisocyanate or polyisocyanate to give an isocyanate capped urethane oligomer which is further reacted with a glycol acrylate or methacrylate ester and 10 to 50 weight percent vinylic hydrocarbon.



Xerox Copy Centre

## ETHYLENICALLY UNSATURATED URETHANES FOR GEL COAT COMPOSITIONS

This invention relates to coating compositions based on unsaturated urethane polymers and gel coats prepared therefrom.

## BACKGROUND OF THE INVENTION

Conventional gel coat compositions, typically formulated from polyester, acrylate, and urethane type resins and combinations thereof are useful as the exterior paint layer for boats and bathroom fixtures such as shower stalls, bath tub enclosures and the like. A gel coat is a pigmented, filled, and prepromoted resin (usually polyester) which is sprayed with an initiator onto molds from a high pressure spray gun to a film thickness of up to 0.75 mm. The film cures prior to reinforcement with glass fibers and laminating resins. The gel coat should exhibit low viscosity at high shear, should resist sagging, and have a gel time of about 8-12 minutes. For marine and other applications, the products require hydrolytic stability and good weatherability.

Use of unsaturated polyesters in admixture with unsaturated aromatic monomers such as styrene used for the production of crosslinked polymers initiated by peroxide is well known. The unsaturated polyesters are prepared from the condensation of unsaturated acids or acid anhydrides with diols and polyols. The common unsaturated acid used is either maleic anhydride or fumaric acid. Because ester linkages formed from these materials exhibit poor hydrolysis resistance, the overall film performance of a coating film based on these polymers is somewhat poor. In addition, an aromatic diacid, such as phthalic and isophthalic acid, is generally present and the molecular weight of the polymer is maintained above a number average molecular weight of 2000 to achieve the hydrolysis resistance of the film. However, the presence of the aromatic nuclei in the polymer backbone and the necessity to add high levels of unsaturated aromatic monomers to obtain sprayable viscosity lead to poor exterior durability in the coated product.

A commonly assigned application, Serial No. 728,399 filed April 29, 1985, and U.S. 4,587,323 have relevancy to the instant case in that they pertain to the same end use. U.S. 4,587,323 relates to coatings derived from hydroxy functional non-aromatic polyester reacted with non-aromatic isocyanates to produce low (number average) molecular weight coatings. U.S. 4,304,883 (1981) (Fujii, Tanaka et al) teaches unsaturated polyester resins for coating metal substrate comprising a vinyl monomer and a dicyclopentadiene modified alkyd. U.S. 4,320,221 teaches the reaction of ethylenically unsaturated monofunctional isocyanate and a difunctional polyol as an anerobic adhesive. Other coatings incorporate conventional isophthalic and phthalic based urethane polyesters having various pendant unsaturation.

Urethanes have been incorporated into useful coatings via various techniques. U.S. 3,928,299 (1975) teaches vinyl solution polymers which contain urethane groups and are crosslinkable by vinyl or vinylidene polymerization. The urethane groups are introduced by reacting hydroxy groups pendant from the acrylate backbone with isocyanoalkyl acrylates or methacrylates. Urethane modified epoxy resins are taught in U.S. 3,478,126.

Unruh and Smith, U.S. 2,887,469 (1959), teach urethane derivatives of hydroxy containing polymers such as ethyl cellulose, cellulose acetate using monohaloalkyl isocyanate and quaternary urethanes formed with tertiary amines. U.S. 2,786,154 teaches polymeric carbalkoxy urethane via the reaction of carbalkoxy isocyanate ($O=C=N-R-COOR^1$) with hydroxy functional polymers. U.S. 4,446,175 and U.S. 4,436,885 (1984) teach isocyanate functional acrylic solvent copolymers of 2-isocyanotoethyl) (meth)acrylate with other acrylate monomers in the presence of a mercaptan chain-transfer agent.

U.S. 4,320,221 (1982) teaches the reaction of ethylenically unsaturated monofunctional isocyanate and a difunctional polyol as an anerobic adhesive.

U.S. 4,287,323 (1981) teaches addition polymerizable polyethers having pendant ethylenically unsaturated urethane groups as useful flooring materials. Such urethane polyethers are prepared by reacting a polyether polyol (hydroxy terminated polypropylene glycol) with an isocyanatoalkyl (meth)acrylate.

U.S. 4,273,690 (1981) teaches a graft copolymer binder for coatings having an acrylic backbone and alkyd resin chains attached to the backbone by an isocyanate group reactive with the hydroxyl or carboxylic group of the alkyd resin.

Others have attempted to reduce gel coat problems such as blistering or extended water exposure by increasing the film thickness of the gel coat (See Denoms et al, Annual Conference, Reinforced Plastics/Composites Institute, The Society of the Plastics Industry, Inc., February 7-11, 1983).

Vinyl esters based on aromatic polyepoxide resin reacted with unsaturated monocarboxylic acid and other moieties are exemplified in U.S. Patents 3,367,992; 3,066,112; and 3,179,623. The presence of the aromatic nuclei and the necessity of adding high levels of unsaturated aromatic monomers to obtain a sprayable viscosity leads to unacceptable exterior durability while those based on aliphatic polyepoxides show poor hydrolysis resistance.

The above deficiencies have been largely overcome by the gel coats of the present invention based on unsaturated urethane oligomers. The improved coatings provide gel coats with low viscosity and excellent hydrolysis and weathering stability.

## BRIEF SUMMARY OF THE INVENTION

The invention relates to a gel coat coating composition comprising a functional urethane having terminal and/or pendant ethylenic unsaturation derived from acrylic and methacrylic acid glycol esters, where said urethane is the reaction product of one or more non-aromatic isocyanates, preferably those having two or more $-N=C=O$ groups per molecule with a glycol, preferably a hindered glycol and a glycol ester.

Another aspect relates to gel coat composites comprising 50 to 90 weight percent functional urethane having a number average molecular weight of from about 500 to about 1500 and an unsaturation to urethane linkage mole ratio of from about 0.5 to 6.0; and 10 to 50 weight percent aromatic vinylic monomer, wherein said unsaturated urethane is the reaction product of

a) a non-aromatic isocyanate having a plurality of isocyanate functionality adapted to react in a first stage with hydroxyl groups on glycol (b) to produce an isocyanate oligomer which is further reacted in a second stage with glycol ester (c) to form a urethane resin;

b) a glycol selected from the group consisting of ethylene glycol, propylene glycol, neopentyl glycol, hydrogenated bisphenol A, trimethylol propane and trimethylol ethane; and

c) a glycol ester having the structure:

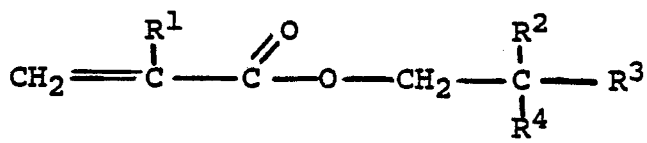

wherein $R^1$ is hydrogen or $CH_3$-; $R^2$, $R^3$, and $R^4$ are independently H-, $CH_3$-, HO-or $HOCH_2$-, with the proviso that at least one of said groups has to be an HO-or $HOCH_2$-radical.

## DETAILED DESCRIPTION OF THE INVENTION

This invention relates to improved urethane oligomers having terminal and/or pendant ethylenic unsaturation and gel coats comprising the oligomer and up to 40 weight percent (total components) of aromatic vinylidene compound such as styrene capable of hardening the composition by double bond polymerization with the unsaturated polyester.

The urethane oligomers represent the reaction product of

a) a non-aromatic isocyanate having a plurality of isocyanate functionality adapted to react in a first stage with hydroxyl groups on glycol (b) to produce an isocyanate oligomer which is further reacted in a second stage with glycol ester (c) to form a urethane oligomer;

b) a glycol selected from the group consisting of ethylene glycol, propylene glycol, neopentyl glycol, hydrogenated bisphenol A, trimethylol propane and trimethylol ethane; and

c) a glycol ester having the structure:

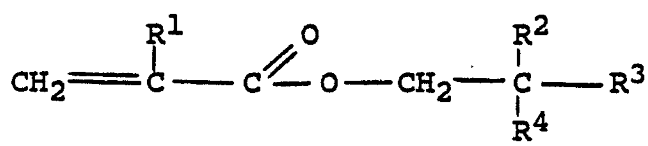

wherein $R^1$ is hydrogen or $CH_3$-; $R^2$, $R^3$, and $R^4$ are independently H-, $CH_3$-, HO-or $HOCH_2$-, with the proviso that at least one of said groups has to be an HO-or $HOC_2$-radical.

The resulting urethane oligomer will be substantially non-aromatic, advantageously will have a number average molecular weight of from about 500 to about 1500, and will be substantially free of unreacted isocyanate functionality.

With regard to the unsaturation present in the urethane as terminal and/or pendant ethylenic unsaturation, it is desired to have one unit of double bond unsaturation per 1 to 10 units of urethane linkage and more desirably 1 to 5 units of said ethylenic unsaturation. Such ethylenic unsaturation will have the generalized structure:

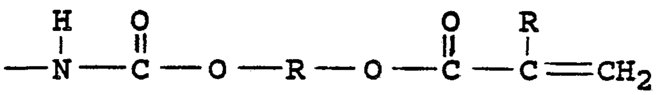

and preferably are derived from glycol esters of acrylic acid and methacrylic acid wherein the glycol portion is derived from neopentyl glycol, trimethylol propane or trimethylol ethane. Both the glycol and glycol esters are required to be non-aromatic in nature.

The preferred glycol is trimethylol propane which advantageously comprises at least 40 percent of the total glycol content required for the preparation of urethane resin. When desired for imparting particular properties, other glycols such as, for example, neopentyl glycol, hydrogenated bisphenol A, cyclohexanedimethanol, hexanediols and octanediol-1,8-trimethylol propane, trimethylol ethane, and pentaerthritol may be used in amounts up to about 60 weight percent basis total glycol and preferably in amounts of 20 to 40 weight percent basis.

Useful non-aromatic diisocyanates for the formation of urethane extended polyesters include isophorone diisocyanate, hexamethylene diisocyanate, tetramethylene diisocyanate, 2,2,4-trimethylhexane diisocyanate, 2,4,4-trimethylhexane diisocyanate, and 4,4-dicyclohexylmethane diisocyanate. Isophorone diisocyanate is the preferred reactant. Isocyanate terminated prepolymer such as trimerized isophorone diisocyanate may be used in partial or complete substitution for the diisocyanate monomer. Useful prepolymers include the reaction product of about 2.0 moles of a diisocyanate with 1.0 to 1.5 moles of an aliphatic diol or polyol--the reaction product of isophorone diisocyanate with trimethylol propane being a preferred prepolymer.

In the formation of gel coats, the unsaturated urethane is mixed at weight percentages of from about 60 to 85 with one or more ethylenically unsaturated aromatic present at 40 to 15 weight percent (basis total composition). For this purpose, the ethylenical unsaturation is adapted to participate in the gel/cure crosslinking reaction. Styrene is the preferred monomer for this use although other suitable monomers such as p-methyl styrene, methyl methacrylate, dicyclopentadienyl methacrylate, t-butyl styrene, divinyl benzene, and vinyltoluene can be substituted in whole or in part for the styrene monomer.

The gel coats can be clear or can be formulated as pigmented gel coats using the common additives and pigments known to the art. These include, for example, talcs, clays, pigments, silicas, promoters, ultraviolet stabilizers, and thickeners.

## TEST PANEL PREPARATION

Lupersol DDM-9 (1.2%) is added to the gel coat paint and stirred with a spatula for 30 minutes. Drawdown on a waxed and buffed flat tempered glass plate using a 7/16 × 16" drawndown bar. After curing for 3-4 hours, 3 plys of fiberglass mat are applied with resin (30% mat/70% resin). Lupersol DDM-9 (1.2%) catalyst is added. Allow 40-60 minutes after the gel time of the laminating resin for cure. Remove the laminate from the mold and cut into test strips (film thickness 18-22 mls.).

## BOILING WATER RESISTANCE

Coated test panels (4-¼ × 4-¼) are connected to the boiling water test tank (ANSI 2-124.1) and exposed to boiling water for 100+ hours. The exposed panels are rated on a scale of 0-5 for blisters, color change, change in fiber prominence, cracks and loss of visible gloss with 0 = no change and 5 = maximum change.

QUV WEATHERING

Coated test panels are subjected to the weathering test as per ANSI/ASTM G 53-77 rest procedure using the standard cycle of 4 hours condensation at 50°C. followed by 8 hours UV exposure at 70°C. Test panels are inspected at intervals of 150 hours.

Although the following examples are representative of the invention, they should not be read in a restrictive manner. All parts and percentages are by weight and all temperatures are expressed in degrees Centigrade unless otherwise specified. Molecular weights are expressed as number average molecular weights unless otherwise specified.

EXAMPLE 1 (COMPARATIVE)

Preparation of a Conventional Isophthalic Acid Unsaturated Polyester Resin

In a reactor provided with a stirrer, a thermometer, a water separating column fitted with a reflux condenser, and a nitrogen inlet is added the following ingredients:

| Component | Grams |
|---|---|
| Neopentyl Glycol | 2633 |
| Propylene Glycol | 499 |
| Adipic Acid | 219 |
| Isophthalic Acid | 2240 |
| Maleic Anhydride | 1467 |
| Piperidine | 8.8 |

The charged mixture is heated to reflux and a total of 750 parts of water distilled off. The reaction mixture is then held at 220°C. until an acid number of 18-28 is obtained. Add number average molecular weight:

The reaction mixture is then cooled to less than 140°C. and the following ingredients are added:

| Component | Grams |
|---|---|
| Methoxyhydroquinone | 0.9 |
| Styrene | 2932 |
| Copper Naphthenate | 1.0 |

The resulting solution has a Gardner-Holt bubble-type viscosity of Z-$Z_1$ at 67.5% non-volatile by weight.

EXAMPLE 2 (COMPARATIVE)

Preparation of a Conventional Gel Coat Coating

A gel coat coating composition is then prepared by blending the following ingredients:

| Components | Weight Percent |
|---|---|
| Resin solution from comparative Example 1 | 55.45 |
| Potassium Hex-Cem* | 0.25 |
| "Lo-Vel" 27* | 3.50 |
| "Mistron" Monomix* | 10.00 |
| Titanium Dioxide | 11.00 |
| "Chem-All" 12% Cobalt* | 0.20 |
| Styrene | 19.40 |
| Ethylene Glycol | 0.20 |

*Potassium Hex-Cem and Chem-All are trademarks of Mooney Chemicals; Lo-Vel is a trademark of PPG Industries; Mistron is a trademark of Cyprus Industrial Minerals Co.

The resulting paint has a Brookfield viscosity of approximately 300 cps at 77°F. and a thixotropic index of 5-6. The paint contains 37% styrene by weight and 13.4% by weight of a polymerized aromatic diacid. The weathering characteristics as measured by QUV are listed below.

| Hours | ΔE | % Gloss Retention |
|---|---|---|
| 150 | 8.68 | 75.0 |
| 300 | 8.66 | 3.6 |

A panel was immersed in boiling water for 100 hours and exhibited some loss of gloss and slight blister formation.

EXAMPLE 3

Preparation of Urethane with Acrylate Ester Functionality

Isophorone diisocyanate (1472 grams--6.62 moles) was charged to a reaction vessel fitted with a stirrer, thermometer, an addition funnel and a reflux condenser. Trimethylol propane (230 grams--1.71 moles) was added to the vessel and the temperature of the mixture slowly raised to 90°C. Ionol (0.56 grams) and dibutyl tin dilaurate (2.8 grams) were added followed by the addition of 1063 grams (9.16 moles) 2-hydroxyethyl acrylate over a period of 1 hour, 45 minutes. The reaction mixture was held at 100°C. for 0.5 hours after which the batch was cooled and 413 grams of styrene were added. The final product has a non-volatile content of 81.9% and a free NCO content of 0.08%. The urethane ester has a number average molecular weight of 675.

EXAMPLE 4

Gel Coat Paint Base of Polymer of Example 3

A gel coat coatings composition was prepared by blending the following ingredients:

| Components | Weight (grams) |
|---|---|
| Resin solution from Example 1 | 450 |
| Styrene | 300 |
| Potassium Hex-Cem* | 2.5 |
| "Lo-Vel" 27* | 35 |
| "Mistron" Monomix* | 100 |
| Titanium Dioxide | 110 |
| "Chem-All" 12% Cobalt* | 3 |
| Ethylene Glycol | 2 |

*Potassium Hex-Cem and Chem-All are trademarks of Mooney Chemicals; Lo-Vel is a trademark of PPG Industries; Mistron is a trademark of Cyprus Industrial Minerals Co.

The resulting paint has a Brookfield viscosity of 9700 cps (6 rpm) at 77°F. and a thixotropic index of 3.66. The paint contained 38.14% styrene by weight.

EXAMPLE 5

Urethane with Trimerized Isophorone Diisocyanate

Huls T-1890 (trimerized isophorone diisocyante) (303.5 grams) was mixed with 0.12 grams of dibutyl tin dilaurate, 0.12 grams of ionol, and 117.4 grams of styrene in a reaction vessel as described in Example 3. This mixture was heated to 80°C. and 166.5 grams of 2-hydroxyethyl acrylate were added slowly. After the addition was complete, the reaction mixture was held at 80°C. for 2 hours, after which the % NCO was measured at 0.06%. The mixture was then cooled to room temperature. The resulting resin solution gave a Gardner-Holt viscosity of $Z_6$ and a non-volatile content of 64.6%. The resin itself has a number average molecualr weight of 1015.

EXAMPLE 6

In the following table the Water Boil Resistance and QUV Weathering of the unsaturated urethane gel coat are compared with a standard isophthalate-based unsaturated polyester.

The performance of the urethane based gel coat composition is compared to a gel coat paint made from a standard isophthalate-based unsaturated polyester.

| Resin | Water Boil (100 Hours) Blistering | Gloss Loss | QUV Weathering Hours | $\Delta E$ | % Gloss Retention |
|---|---|---|---|---|---|
| Example 3 | None | Slight | 150 | 6.94 | 97.1 |
| | | | 300 | 9.05 | 7.6 |
| Unsaturated Polyester Control* | Moderate | Slight | 150 | 8.68 | 75.0 |
| | | | 300 | 8.66 | 3.6 |

*The polyester control contains 33.5% styrene by weight.

As shown from the table, the gel coat of Example 3 exhibits improved water boil resistance while maintaining acceptable accelerated weathering resistance.

## Claims

1. A coating composition suitable for preparing gel coat composites which comprises a non-aromatic urethane backbone resin free of isocyanate functionality and having pendant or terminal monoethylenic unsaturation in a mole ratio of from about 1:1 to about 1:3 basis mole of urethane group present; and wherein said urethane resin comprises the reaction product of:

a) a non-aromatic diisocyanate or polyisocyanate having a plurality of isocyanate functional groups adapted to react in a first stage with glycol (b) to produce an isocyanate terminated oligomer which is further reacted in a second stage with glycol ester (c);

b) a glycol selected from the group consisting of ethylene glycol, propylene glycol, 1,3-butylene glycol, neopentyl glycol, hydrogenated bisphenol A, trimethylol propane and trimethylol ethane; and

c) a glycol ester having the structure:

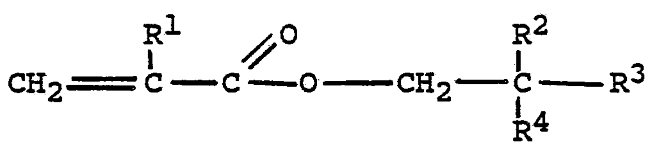

wherein $R^1$ is hydrogen or $CH_3$-; $R^2$, $R^3$, and $R^4$ are independently H-, $CH_3$-, -OH or -$CH_2OH$; with the proviso that at least one of said groups has to be a -$CH_2OH$ or a -OH group; wherein the mole ratio of glycol ester to said glycol is from about 1:05 to about 1:3; and wherein the mole ratio of isocyanate functionality in the isocyanate terminated oligomer to hydroxyl functionality in the glycol ester is from about 0.1:1 to about 1.0:1.65.

2. The composition of claim 1, wherein the glycol is selected from the group consisting of neopentyl glycol and trimethylol propane and the glycol ester is selected from the group consisting of 2-hydroxyethyl acrylate and 2-hydroxyethyl methacrylate.

3. The composition of either of claims 1 and 2, wherein the urethane resin has a number average molecular weight of from about 500 to about 1500 and the mole ratio of glycol ester to moles glycol is 1:1 : 20:1.

4. The composition of any one of the preceding claims, comprising the reaction product of isophorone diisocyanate, trimethylol propane and 2-hydroxyethyl acrylate.

5. An improved gel coat composition comprising 10 to 50 weight percent of a copolymerizable vinyl monomer; and 50 to 90 weight percent of a non-aromatic unsaturated urethane resin having terminal or pendant monoethylenic unsaturation; said resin free of isocyanate functionality, having a number average molecular weight of from about 500 to about 1500 and having a molar ratio of monoethylenic unsaturation to urethane linkage of from about 1:1 to about 1:3, and wherein said urethane resin contains sufficient

monoethylenic unsaturation to react via vinyl polymerization with said copolymerizable vinyl monomer to impart water boil resistance and improved weathering characteristics to said gel coat composite; wherein said urethane resin is the reaction product of

a) a non-aromatic isocyanate having a plurality of isocyanate functional groups adapted to react in a first stage with hydroxyl functionality on glycol (b) to produce an isocyanate terminated oligomer which is further reacted in a second stage with glycol ester (c);

b) a glycol selected from the group consisting of ethylene glycol, propylene glycol, 1,3-butylene glycol, neopentyl glycol, hydrogenated bisphenol A, trimethylol propane and trimethylol ethane;

c) a glycol ester having the structure:

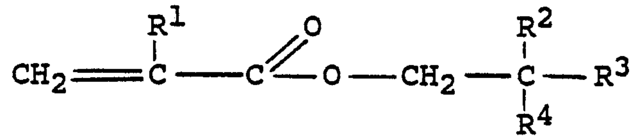

wherein $R^1$ is hydrogen or $CH_3$-; $R^2$, $R^3$, and $R^4$ are independently H-, $CH_3$-, HO-or $HOCH_2$-; with the proviso that at least one of said groups has to be an HO-or $HOCH_2$-radical.

6. The composition of claim 5, wherein the vinyl monomer is an aromatic vinylic monomer present in an amount of less than 50 weight percent basis combined total weights of aromatic vinyl monomer plus urethane resin and said urethane resin comprises (a) the reaction product of isophorone diisocyanate, trimethylol propane and 2-hydroxyacrylate.

7. The composition of claim 6, wherein the vinylic monomer is styrene.

8. An artefact coated with a composition as claimed in any one of the preceding claims.